# EUROPÄISCHE PATENTSCHRIFT

(11) **EP 0 857 982 B1**
(45) Veröffentlichungstag und Bekanntmachung des Hinweises auf die Patenterteilung: **18.05.2005**
(21) Anmeldenummer: 98100794.1
(22) Anmeldetag: 19.01.1998
(51) Int. Cl.: G01S 17/93, G01S 17/10, G01S 7/486

(54) **Verfahren und Vorrichtung zum Bestimmen eines Abstandes zwischen Fahrzeug und Hindernis**
Method and device for distance determination between vehicle and obstacle
Procédé et dispositif pour la détermination de distance entre un véhicule et un obstacle

(30) Priorität: 05.02.1997 DE 19704220
(43) Veröffentlichungstag der Anmeldung: 12.08.1998
(73) Patentinhaber: Volkswagen Aktiengesellschaft, 38436 Wolfsburg (DE); Ingenieurbüro Spies, 86558 Hohenwart (DE)
(72) Erfinder: Bäker, Wolfgang, 38114 Braunschweig (DE); Ruchatz, Thomas, Dipl.-Ing., 38165 Lehre (DE); Spies, Martin, 86558 Hohenwart (DE)

(56) Entgegenhaltungen:
- EP-A- 0 269 902
- DE-A- 3 327 793
- DE-A- 4 032 713
- DE-A- 19 541 448

## Beschreibung

Die Erfindung bezieht sich auf ein Verfahren und eine Vorrichtung zum Bestimmen eines Abstandes zwischen Fahrzeug und Hindernis nach dem Oberbegriff des jeweiligen unabhängigen Anspruchs.

Beim Bestimmen des Abstandes eines Fahrzeugs von einem Hindernis werden von einem Abstandssensor Abtastpulse ausgesendet und die von dem vor dem Fahrzeug liegenden Gegenstand oder Hindernis als Echosignal rückgestreuten Abtastpulse erfaßt. Der Abstand des Fahrzeuges von dem Hindernis wird ermittelt, indem die Zeit zwischen Aussenden des Abtastpulses und Empfang des Echosignals gemessen und mit der Ausbreitungsgeschwindigkeit des Signals multipliziert wird. Sobald dieser Wert einen vorgegebenen Grenzwert unterschreitet, wird an den Fahrer ein Warnsignal ausgegeben bzw. greift die Steuerung direkt in die Fahrdynamik ein, was u. a. eine Zwangsbremsung bedeuten kann.

Da der Abstand des Fahrzeugs zu einem auf der Fahrbahn befindlichen Hindernis eine sehr wesentliche Information für den Fahrer darstellt, muß ein solches Systems sehr zuverlässig arbeiten. Fehlfunktionen können schwerwiegende Folgen für die Fahrsicherheit haben. Es werden daher laufend Anstrengungen unternommen, Ausfälle der Abstandsmessung aufgrund von Alterung und Verschmutzung der Sensoren oder auch aufgrund von Umwelteinflüssen wie schlechter Sicht durch Regen, Schnee, Nebel auszuschließen. Bei der Auswertung des Echosignals werden daher beim augenblicklichen Stand der Technik die Intensität und die Laufzeit des Echosignals miteinander korreliert. Das Echosignal wird mit einem Vergleichswert verglichen, der größer in einem Fall ist, in welchem die Zeit zwischen Aussenden des Abtastpulses und dem Empfang des Echosignals kürzer ist, verglichen mit einem Fall, in welchem die Zeit zwischen Aussenden des Abtastpulses und dem Empfang des Echosignals größer ist. Eine entsprechende Vorrichtung und ein Verfahren zur Entfernungsmessung bei einem Fahrzeug sind in DE 195 41 448 beschrieben.

Bei den bisher bekannten Verfahren und Vorrichtungen werden die Echosignale direkt mit einem Vergleichswert verglichen. Dazu ist eine hohe Rückstrahlenergie notwendig, die z. B. bei verschmutzten Objekten als Hindernissen nicht erreicht wird, da sie schlecht reflektieren. Um unabhängig von dem Reflexionsvermögen des Hindernisses Entfernungsmessungen durchführen zu können, muss daher beim Stand der Technik die Sendeleistung immer deutlich über der für die Messung unter optimalen Bedingungen erforderlichen Leistung liegen, was einen aufwendigeren Aufbau und teurere Sendemodule in den Abstandssensoren notwendig macht.

In der EP 0 269 902 A2 ist ein Verfahren zum Bestimmen der Entfernung zwischen zwei Objekten offenbart, wobei von dem ersten Objekt ein Lichtimpuls abgestrahlt und dieser von dem zweiten Objekt zumindest teilweise in Richtung auf das erste Objekt reflektiert und dieser Anteil am Ort des ersten Objektes mit einem Empfänger empfangen wird. Der reflektierte Lichtimpuls wird aus dem Empfangssignal separiert und aus der Laufzeit die Entfernung zwischen den Objekten bestimmt. Dabei wird das Empfangssignal differenziert und eine Amplitudenhäufigkeitsverteilung aufgestellt. Der häufigst auftretende Amplitudenwert wird bestimmt und zu beiden Seiten dieses Wertes werden jeweils ein weiterer Wert als untere bzw. obere Amplitudenschwelle ausgewählt, wobei nur unterhalb bzw. oberhalb der beiden Amplitudenschwellen das differenzierte Empfangssignal berücksichtigt wird. In Folge werden nur solche Signalanteile dem reflektierten Lichtimpuls zugeordnet, welche diese Amplitudenschwellen unter- bzw. überschreiten.

Bei einer Radaranlage gemäß der DE 33 27 793 A1 mit Einrichtungen zur zeitabhängigen Dämpfung wird im Nahbereich im Interesse von an die Radaranlage angeschlossenen analogen Verbrauchern die Dämpfung geringer gehalten, als es der R⁻⁴-Abhängigkeit entspricht, so dass in diesem Entfemungsbereich ein Verstärkungsüberschuss entsteht. Zur Verringerung der dadurch entstehenden erhöhten Falschzielrate ist eine Amplitudenschwelle zur Quantisierung der Videosignale innerhalb dieses Bereiches zeitabhängig, vom Bereichsbeginn monoton absinkend vorgebbar.

Die DE 195 41 448 A1 offenbart eine Entfernungsmessvorrichtung für ein Fahrzeug mit einer Abstrahlung- und Empfangsvorrichtung für eine elektromagnetische Welle. Eine weiterhin vorhandene Ausbreitungszeitmessvorrichtung weist dabei einen Vergleichswert auf, der mit größer werdenden Messzeiten kleiner wird. Dabei wird ein Zeitpunkt erfasst, an welchem das Empfangssignal größer oder gleich dem Vergleichswert ist. Die erfasste Zeitdifferenz zwischen Abstrahlungsbeginn und Schnittpunkt mit dem Vergleichswert wird zur Berechnung der Entfernung herangezogen.

Um die Messungen mit minimalem Aufwand effektiv durchführen zu können und die Zuverlässigkeit und den Rauschabstand bei der Auswertung des von einem Abstandssensor empfangenen Echosignals zu erhöhen und damit die Empfindlichkeit des Abstandssensors insgesamt zu verbessern, wird ein erfindungsgemäßes Verfahren und eine erfindungsgemäße Vorrichtung vorgeschlagen, mit dem bzw. der die Empfangssignale des Abstandssensors störungsfrei ausgewertet werden können.

Das erfindungsgemäße Verfahren hat die Merkmale nach dem unabhängigen Verfahrensanspruch, die erfindungsgemäße Vorrichtung hat die Merkmale nach dem unabhängigen Vorrichtungsanspruch. Die jeweiligen Unteransprüche beziehen sich auf vorteilhafte Ausführungsformen bzw. Weiterentwicklungen des Verfahrens und der Vorrichtung.

Als nächstliegender Stand der Technik wird die EP 0 269 902 betrachtet, aus der die Verfahrensschritte Aussenden von Abtastpulsen, Erfassen und Differenzieren eines zeitabhängigen Empfängersignals, und Ermitteln eines Hindemisabstandes aus der Laufzeit eines ausgesendeten und empfangenen Abtastpulses bekannt sind.

Das erfindungsgemäße Verfahren zum Bestimmen eines Abstandes eines Hindernisses von einem Fahrzeug mit einem Abstandssensor mit den Schritten Aussenden von Abtastpulsen durch eine Sendevorrichtung des Abstandssensors und Erfassen eines zeitabhängigen Empfängersignals mit einem von dem Hindernis rückgestreuten Abtastpuls ist gekennzeichnet durch Differenzieren des Empfängersignals nach der Zeit zum Erzeugen eines Ableitungssignals, Erzeugen eines vorgegebenen Vergleichssignals, dessen Absolutwert mit der Zeit monoton abnimmt, Vergleichen des Ableitungssignals mit dem vorgegebenen Vergleichssignal und Ausgeben eines Zeitgeberpulses, wenn das Vergleichssignal und das Ableitungssignal den gleichen Wert annehmen, sowie Ermitteln des Hindernisabstandes aus der Zeit zwischen dem Aussenden des Abtastpulses durch den Abstandssensor und dem Ausgeben des Zeitgeberpulses.

Eine bevorzugte Ausführungsform des erfindungsgemäße Verfahren ist dadurch gekennzeichnet, daß das vorgegebene Vergleichssignal daß das Vergleichssignal positive und negative Werte umfaßt, die bezüglich der Nullinie symmetrisch sind. Insbesondere können sich dabei die positiven und negativen Werte des Vergleichssignals "trompetenförmig" mit der Zeit der Nullinie nähern. Diese Trompetenform" ist z. B. durch eine Exponentialfunktion oder durch eine 1/ₓ² Funktion vom Abstand beschreibbar.

Bei einer weiteren bevorzugten Ausführungsform des erfindungsgemäßen Verfahrens wird ausgenutzt, daß es mindestens einen Nulldurchgang des Ableitungssignals geben muß, wenn das Echosignal ein normal ansteigender und abfallender Puls ist. Dann nimmt das Ableitungssignal viermal einen gleichen Wert wie ein Ast des Vergleichssignals an (zweimal beim positiven Ast und zweimal beim negativen Ast), und es werden mehrere Zeitgeberpulse zu den entsprechenden, unterschiedlichen Zeiten ausgegeben. Anschließend wird in der bevorzugten Ausführungsform der zeitliche Mittelwert von wenigstens zwei der vier Zeitgeberpulse gebildet und der Hindernisabstand aus der Zeit zwischen dem Aussenden von Abtastpulsen durch den Abstandssensor und dem Mittelwert der Zeitgeberpulse ermittelt. Damit wird die tatsächliche Zeit zwischen dem Aussenden des Abtastpulses und dem Empfang des rückgestreuten Abtastpulses genauer festgelegt, als dies mit einer einfachen Schwellenwertdiskriminierung mit nur einem einzigen Zeitgeberpuls als Ergebnis möglich wäre.

Ferner können mehrere Abtastpulse mit einer vorgegebenen Repetitionsrate ausgesendet werden, wobei die Repetitionsrate von der Entfernung zu einem Hindernis abhängt. Die einzelnen Messungen können dann insbesondere auch gemittelt werden.

Die erfindungsgemäße Vorrichtung zum Bestimmen eines Abstandes eines Hindernisses von einem Fahrzeug mit einem Abstandssensor, der eine Sendevorrichtung zum Aussenden von Abtastpulsen und eine Empfängervorrichtung zum Erfassen von einem von dem Hindernis rückgestreuten Abtastpuls umfaßt, und mit einer Zeitmeßeinheit zum Erfassen der Zeit zwischen dem Aussenden eines Abtastpulses und dem Erfassen des von einem Hindemis rückgestreuten Abtastpulses, ist gekennzeichnet durch einen Differenzierer zum Erzeugen eines Ableitungssignals durch Differenzieren des Empfängersignals nach der Zeit, einen Generator zum Erzeugen eines vorgegebenen Vergleichssignals, dessen Absolutwert mit der Zeit monoton abnimmt, und einen Vergleicher zum Vergleichen des Ableitungssignals mit dem Vergleichssignal und zum Ausgeben eines Zeitgeberpulses an die Zeitmeßeinheit, wenn das Ableitungssignal den gleichen Wert wie das Vergleichssignal annimmt.

Insbesondere ist der Signalgenerator ein Rampengenerator oder ein Sägezahngenerator.

In einer bevorzugten Ausführungsform der Vorrichtung ist diese dadurch gekennzeichnet, daß der Signalgenerator einen positiven und einen negativen Ausgang aufweist und ein bezüglich der Nullinie symmetrisches Vergleichssignal mit positiven und negativen Werten ausgibt.

Insbesondere kann das Vergleichssignal ein mit der Zeit monoton, "trompetenförmig" zusammenlaufendes Signal sein. Das heißt, daß der Absolutwert des Vergleichssignals abnimmt und die beiden "Äste" des Vergleichssignals sich symmetrisch der Nullinie nähern.

In einer Weiterentwicklung der erfindungsgemäßen Vorrichtung ist diese dadurch gekennzeichnet, daß sie zwischen Empfängervorrichtung und Differenzierer eine Akkumulatoreinheit, in der mehrere Empfängersignale gespeichert werden, und eine Mittelwerteinheit, die aus mehreren Empfängersignalen ein Mittelwertsignal bildet, umfaßt.

Das erfindungsgemäße Verfahren hat den Vorteil, daß die Messung unabhängig von dem Reflexionsvermögen des Hindernisses und unabhängig von Umwelteinflüssen erfolgen kann. Denn unabhängig von der Signalhöhe des Echosignals ist die Steigung der Anstiegs- und der Abklingflanke des Echosignals im wesentlichen immer gleich. Das bedeutet, daß auch der Wert des Ableitungssignals bei Echosignalen unterschiedlicher Höhe im wesentlichen immer gleich ist. Da die Welligkeit des Echosignals bei sehr kurzen Laufzeiten aber schlecht vorhersagbar ist und es zu großen Ableitungswerten in diesem Bereich des Echosignals kommen kann, wird die Empfindlichkeit des Verfahrens erfindungsgemäß bei sehr kurzen Laufzeiten, die nur von Hindernissen stammen können, die im Sichtbereich des Fahrers liegen und für die eine Abstandsmessung nicht so kritisch ist wie bei Hindernissen in einer größeren Entfernung, verringert.

Die Erfindung wird zum besseren Verständnis im folgenden unter Angabe von weiteren Merkmalen und Vorteilen anhand eines zeichnerisch dargestellten Ausführungsbeispiels sowie eines Meßergebnisses näher erläutert. Es zeigt:
Fig. 1 den Schaltplan einer Ausführungsform der erfindungsgemäßen Vorrichtung;
Fig. 2a, 2b und 2c das Spektrum eines Empfängersignals, das dazugehörige Ableitungssignal und ein Spektrum mit den entsprechenden Zeitgeberpulsen.

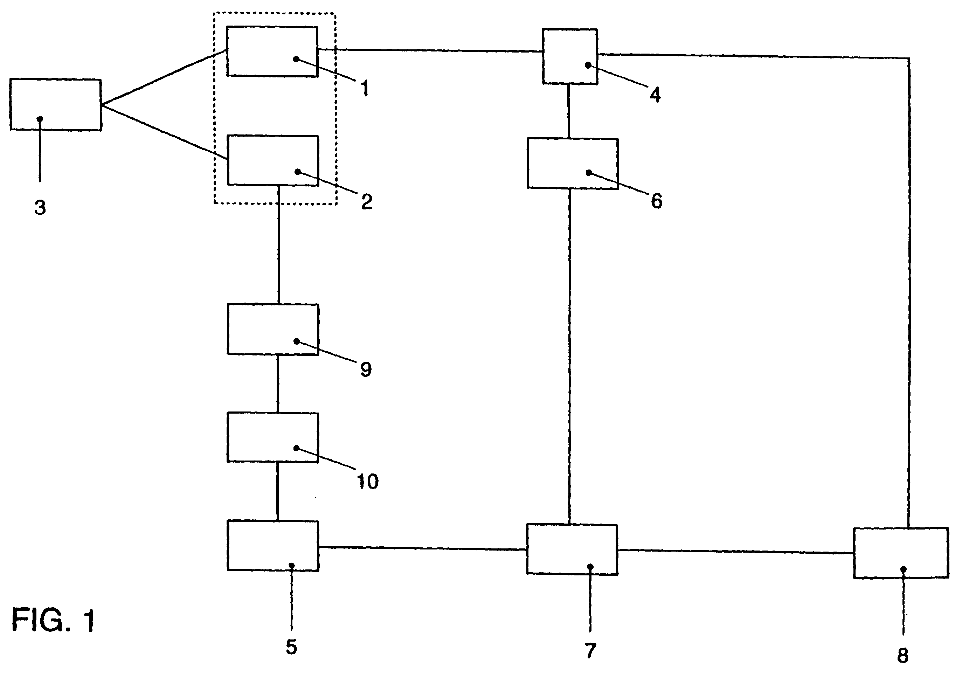

Die in Fig. 1 dargestellte Ausführungsform einer erfindungsgemäßen Vorrichtung zum Bestimmen eines Abstandes eines Hindernisses von einem Fahrzeug mit einem Abstandssensor umfaßt als Hauptkomponenten einen Abstandssensor mit einer Sendevorrichtung 1 zum Aussenden von Abtastpulsen und eine Empfängervorrichtung 2 zum Erfassen von Echosignalen. Die Abtastpulse können dabei optische oder sonstige elektromagnetische (Radar-) Signale oder akustische Signale sein. Dementsprechend ist die Sendevorrichtung eine Lichtquelle, vorzugsweise ein (Halbleiter-) Laser, ein Radarsender oder ein (Ultra-) Schallgeber. Welche Signale verwendet werden, hängt von den Anforderungen bezüglich Reichweite, Ortsauflösung, Kosten etc. ab. Bei der Beschreibung der Ausführungsform nach Fig. 1 wird von einem Halbleiterlaser als Sendevorrichtung ausgegangen, ohne daß dies eine Einschränkung der Erfindung auf eine solche Sendevorrichtung bedeutet. Als Pulsdauer der Abtastpulse wird normalerweise eine Pulsdauer von 5 bis 20 ns gewählt, je nach Anwendung sind andere Zeiten und Pulsformen sinnvoll. Die vom Sender ausgestrahlten Abtastpulse können sich entweder ungehindert ausbreiten oder treffen nach einer gewissen Entfernung z. B. auf ein Hindernis 3, von dem sie reflektiert werden. Im ersten Fall gehen die Abtastpulse quasi verloren, und aus dem Fehlen eines reflektierten Signalpulses wird gefolgert, daß die vor dem Fahrzeug liegende Strecke frei ist. Werden dagegen im zweiten Fall die Abtastpulse von einem Hindernis 3 reflektiert, so werden die reflektierten oder rückgestreuten Abtastpulse von der Empfängervorrichtung 2 im Abstandssensor aufgefangen. Der Abstandssensor ist vorzugsweise eine Einheit, die bevorzugt in ein Scheinwerfergehäuse im Fahrzeug eingebaut wird, und als Komponenten die Sendevorrichtung 1 und die Empfängervorrichtung 2 umfaßt. Der Abstandssensor ist als Einheit in Fig. 1 gestrichelt dargestellt.

Obgleich die Aussendung von Abtastpulsen prinzipiell asynchron erfolgen kann, so ist es jedoch vorteilhaft, wenn das Aussenden der Abtastpulse an einen Systemtakt gekoppelt wird, mit dem auch die weitere Elektronik für die Auswertung der Messung angesteuert wird. Aus diesem Grund ist in der in Fig. 1 gezeigten Ausführungsform die Sendevorrichtung mit der Systemuhr 4 verbunden, die an alle an sie angeschlossene Komponenten ein Taktsignal ausgibt. Die weiteren an die Systemuhr 4 angeschlossenen Komponenten werden im folgenden erläutert.

Aufgrund der Ausbreitungsbedingungen für die elektromagnetischen oder akustischen Signalpulse und aufgrund von Störungen der Sensoren im Fahrzeug ist das aufgefangene Empfängersignal in der Regel stark verrauscht. Nach dem Empfang der rückgestreuten Abtastsignale müssen diese daher zunächst aufbereitet werden, damit man aus ihrer Laufzeit einen Abstand ermitteln kann. Diese Aufbereitung erfolgt in der Elektronik nach der Empfängervorrichtung 2 durch (nicht dargestellte) Verstärker und eventuell erste Rauschunterdrückungsfilter.

Um eine von unterschiedlich stark reflektierten Abtastpulsen unabhängige Messung durchführen zu können, umfaßt die erfindungsgemäße Vorrichtung einen Differenzierer 5, der das von der Empfängervorrichtung kommende Signal differenziert. An seinem Ausgang liegt ein Ableitungssignal 14 an, dessen Größe durch die Anstiegsgeschwindigkeit und Abklinggeschwindigkeit des rückgestreuten Abtastpulses bestimmt ist. Die Anstiegsgeschwindigkeit des ausgesendeten Abtastpulses ist gegeben durch die Sendevorrichtung. Z. B. hat der Sendepuls bei einem Halbleiterlaser in etwa die Form einer Gauß-Verteilung mit einer vorgegebenen Pulshöhe und einer vorgegebenen Breite. Die Form der Gauß-Verteilung wird auch bei jeder Reflexion des ausgesendeten Abtastpulses beibehalten, unabhängig vom Reflexionsgrad, d. h. unabhängig von der Höhe des reflektierten Abtastpulses. Durch das Differenzieren des Signals wird also erreicht, daß man nur unverändert übertragene Information als Nachweis für ein Hindernis aus dem ansonsten starken Schwankungen unterworfenen Spektrum des Empfängersignals herausfiltert und somit zuverlässige, von den Schwankungen im Signal unberührte Information erhält.

Die in der Ausführungsform in Fig. 1 dargestellte Akkumulatoreinheit 9 und Mittelwerteinheit 10 sind beide optional. Sie dienen dazu, über Akkumulieren und Bilden eines Mittelwertes aus mehreren Messungen das statistische Rauschen einer einzelnen Messung herauszufiltem. Dadurch ist eine Glättung" des Empfängersignals möglich. Das Prinzip der Messung wird dadurch jedoch nicht berührt.

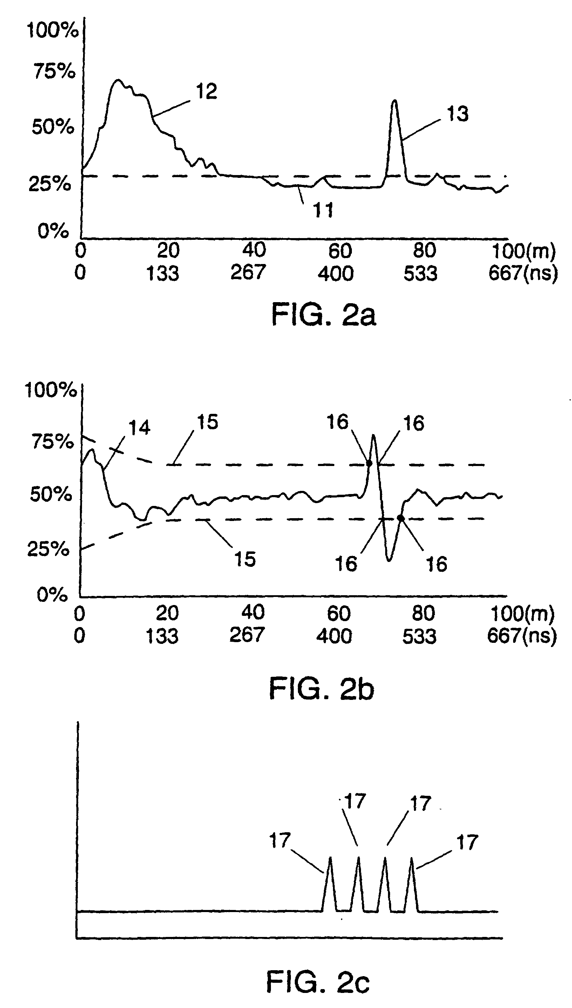

Gleichzeitig mit dem Aussenden eines Abtastpulses wird von einem Signalgenerator 6 ein Vergleichssignal 15 erzeugt. Dazu wird der Signalgenerator 6 ebenso wie die Sendevorrichtung 1 von der Systemuhr 4 angesteuert. Um eine bessere zeitliche Abstimmung zu erzielen, kann zusätzlich eine (nicht dargestellte) Verzögerungsstrecke für das Taktsignal zwischen der Systemuhr 4 und dem Signalgenerator 6 erforderlich sein. Das Vergleichssignal 15 hat einen vorgegebenen Verlauf über die Zeit, und zwar nimmt sein Absolutwert monoton über die Zeit ab. Das Vergleichssignal 15 ist in Fig. 2b dargestellt und wird weiter unten erläutert. Da bei der Ableitung des reflektierten Abtastpulses mit ansteigender und mit abfallender Flanke sich positive und negative Werte ergeben, hat der Signalgenerator einen positiven und einen negativen Ausgang (nicht dargestellt), um als Vergleichssignal 15 ein bipolares Signal, d. h. ein Signal mit einem positiven und zeitgleich mit einem negativen Ast auszugeben, die zueinander bezüglich der Nullinie symmetrisch sind.

Das Ableitungssignal 14 und das Vergleichssignal 15 werden in dem Vergleicher 7 miteinander verglichen. Die Einzelheiten des Vergleichens ergeben sich später aus der Fig. 2b und werden dort erläutert. Sind das Ableitungssignal 14 und das Vergleichssignal 15 gleich, so gibt der Vergleicher 7 einen Zeitgeberpuls 17 an eine Zeitmeßeinheit 8 aus. Die Zeitmeßeinheit 8 erhält außerdem Taktpulse von der Systemuhr 4. Aus dem Taktpuls von der Systemuhr 4 und dem Zeitgeberpuls 17 von dem Vergleicher 7 wird in der Zeitmeßeinheit 8 die Laufzeit des Abtastpulses von der Sendevorrichtung 1 zum Hindernis 3 und zurück zur Empfängervorrichtung 3 berechnet. Die halbe Laufzeit, multipliziert mit der (vorher abgespeicherten) Ausbreitungsgeschwindigkeit für elektromagnetische Strahlung oder Schall, ergibt die Entfernung zwischen Fahrzeug und Hindernis 3.

In Fig. 2 sind der zeitliche Verlauf der einzelnen Signale dargestellt. Fig. 2a zeigt das von der Empfängervorrichtung 2 aufgefangenen Signal vor jeder Verarbeitung (außer erste Rauschunterdrückung, Verstärkung o. ä.). In dem Spektrum ist auf der Abszisse die Laufzeit eines bei der Empfängervorrichtung 2 ankommenden Signals in Bezug auf ein Taktsignal von der Systemuhr 4 aufgetragen. Daneben ist auch die der Laufzeit entsprechende Entfernung angegeben, die sich ergibt, wenn man mit einem elektromagnetischen Puls die Messung durchführt, dessen Ausbreitungsgeschwindigkeit etwa 3 x 10⁸ m/s beträgt. (Man beachte, daß der Weg zwischen Fahrzeug und Hindernis zweimal durchlaufen wird.) Auf der Ordinate ist die Signalhöhe aufgetragen.

Das Empfängersignal in Fig. 2a ist mit 11 bezeichnet. Bei sehr kurzen Laufzeiten sieht man im Spektrum eine sehr breite Struktur, bei der das Signal über einen relativ langen Zeitraum von etwa 5 bis 10 ns ansteigt und über einen ebenfalls relativ langen Zeitraum von 10 bis 15 ns wieder abfällt. Dieses im folgenden mit Nebelsignal bezeichnete Signal 12 entsteht bei diffusen, nicht scharf begrenzten "Hindernissen" wie Nebel, Schnee und Regen. Außerdem können zu den Signalen mit sehr kurzer Laufzeit auch Reflexionen von der Abdeckscheibe des Abstandssensors oder des Scheinwerfergehäuses, in das der Abstandssensor eingebaut ist, beitragen. Da der Abtastpuls durch den Nebel, Regen, Schnee und die Scheibenreflexionen unmittelbar wieder zu der Empfängervorrichtung zurück gelangt, ist er noch sehr wenig abgeschwächt, und das Nebelsignal 12 ist daher verhältnismäßig groß. Außerdem entnimmt man dem Spektrum, daß sich die Streuung aufgrund direkt vor dem Fahrzeug befindlicher "Hindernisse" durch eine größere Welligkeit des Signals auszeichnet. Dies führt wie in Fig. 2b dargestellt auch im Ableitungssignal 14 zu größeren oder vergleichbar großen Werten wie bei einem gestreuten Abtastpuls. Insbesondere kann ein großer und mit einem Ableitungswert von einem gestreuten Abtastpuls vergleichbarer Wert auch von den oben genannten Scheibenreflexionen herrühren.

Bei größeren Laufzeiten ist in Fig. 2a ein Hindernissignal 13 gezeigt, das von einem ca. 75 m entfernten Hindernis vor dem Fahrzeug mit Abstandssensor herrührt. Der durch das Hindernis rückgestreute Abtastpuls hat wie oben beschrieben i. a. in etwa die Form einer Gauß-Verteilung, deren Parameter durch den verwendeten Halbleiterlaser gegeben sind.

In Fig. 2b ist das Ableitungssignal 14 als Ausgangssignal des Differenzierers 5 und gestrichelt das Vergleichssignal 15 als Ausgangssignal des Signalgenerators 6 dargestellt. Das Ausgangssignal 14 des Differenzieres wird durch Differenzieren des Empfängersignals 11 in Fig. 2a erzeugt. Das Differenzieren des Empfängersignals 11 ergibt im Bereich kurzer Laufzeiten wegen der größeren Welligkeit bzw. des verhältnismäßig großen Rauschanteils des Nebelsignalanteils 12 und der Scheibenreflexionen im Empfängersignal 11 auch im Ableitungssignal 14 relativ große Werte. Das Ableitungssignal 14 klingt danach ab und hat nur sehr kleine Werte, bis der reflektierte Abtastpuls als Hindernissignal 13 im Spektrum des Empfängersignals 11 auftritt. Wie oben bereits beschrieben ist das Hindernissignal in etwa eine Gauß-Verteilung mit den entsprechenden hohen Ableitungswerten. Im Ableitungssignal 14 tritt daher ein großer positiver Wert auf, der über dem dargestellte Vergleichssignal 15 liegt. Das Ableitungssignal 14 steigt auf diesen Wert an und schneidet dabei den positiven Ast des Vergleichssignals 15 an einem Schnittpunkt 16. Da das Hindernissignal 13 im Empfängersignal 11 mit derselben Steigung abklingt, wie es ansteigt, ergibt sich in dem Ableitungssignal 14 anschließend ein negativer Wert: das Ableitungssignal 14 fällt ab, wobei es ein zweites Mal den positiven Ast des Vergleichssignals 15 an einem zweiten Schnittpunkt schneidet, durchschreitet die Nullinie, schneidet den negativen Ast des Vergleichssignals 15 an einem dritten Schnittpunkt 16, nimmt einen minimalen Wert an und steigt in der Folge wieder auf etwa Null an, wobei es den negativen Ast des Vergleichssignals 15 an einem vierten Schnittpunkt 16 schneidet.

Um "echte" Hindernissignale 13 von "unechten" wie Nebelsignalen 12 und Scheibenreflexionen zu unterscheiden, muß die Empfindlichkeit des erfindungsgemäßen Verfahrens bei sehr kurzen Laufzeiten des Empfängersignals künstlich verringert werden. Dazu wird der Absolutwert des Vergleichssignals 15 bei kleinen Zeitwerten größer als bei großen Zeitwerten gewählt, so daß der positive und der negative Ast zusammenlaufen wie die beiden Wände einer Trompete im Querschnitt. Die beiden Äste des Vergleichssignals 15 sind also trompetenartig" bei kleinen Laufzeiten aufgeweitet. Die Aufweitung wird dabei so gewählt, daß die erfahrungsgemäß auftretenden Welligkeiten von Nebelsignalen 12 und Scheibenreflexionen keine Ausgabe von Zeitgeberpulsen 17 auslösen.

Die Höhe des Vergleichssignals 15 nach der Aufweitung bei kurzen Laufzeiten ergibt sich aus der Form des Abtastpulses. Mit dessen vorgegebener Form einer Gauß-Verteilung ist seine Steigung bekannt, und man kann den entsprechenden Wert der Ableitung eines beliebigen Hindernissignals 13 vorher abschätzen. Damit kann man die Höhe der Vergleichskurve von vornherein so wählen, daß nur bestimmte (Steigungs-) Werte als Ereignis erkannt werden.

Jeder der Schnittpunkte 16 wird auf bekannte Art und Weise in dem Vergleicher 7 in Fig. 1 erfaßt und löst die Ausgabe eines der in Fig. 2c gezeigten Zeitgeberpulses 17 aus. In Fig. 2c sind alle vier, den vier Schnittpunkten 16 in Fig. 2b entsprechenden Zeitgeberpulse 17 dargestellt. Sie werden exakt zu der Zeit von dem Vergleicher 7 ausgegeben, zu der das Ableitungssignal 14 einen Ast des Vergleichssignals 15 schneidet. Die Zeitgeberpulse 17 werden wie oben erläutert in der Zeitmeßeinheit 8 zur Bestimmung der Laufzeit des Signals verwendet. Dabei kann ein beliebiger der vier genannten Zeitgeberpulse 17 verwendet werden oder das zeitliche Mittel aus zwei oder vier Zeitgeberpulsen 17 gebildet werden.

Ferner kann das regelmäßige Auftreten von vier Zeitgeberpulsen 17 dazu verwendet werden, daß bei Fehlen eines oder mehrerer der Zeitgeberpulse 17 ein Warnsignal ausgegeben wird, das die Fehlfunktion des Abstandssensors anzeigt.

In der Beschreibung wurde nur ein Abtastpuls und ein Empfängersignal betrachtet; es ist für den Fachmann jedoch offensichtlich, daß damit nur eine Periode eines zyklisch wiederkehrenden Prozesses gemeint ist und die Beschreibung keine Einschränkung auf eine einmalige Messung darstellt.

### LISTE DER BEZUGSZEICHEN

- **1**: Sendevorrichtung
- **2**: Empfängervorrichtung
- **3**: Hindernis
- **4**: Systemuhr
- **5**: Differenzierer
- **6**: Signalgenerator
- **7**: Vergleicher
- **8**: Zeitmeßeinheit mit Ausgabeeinheit für Entfernungsangabe
- **9**: Akkumulatoreinheit
- **10**: Mittelwerteinheit
- **11**: Empfängersignal
- **12**: Nebelsignal
- **13**: Hindernissignal
- **14**: Ableitungssignal
- **15**: Vergleichssignal
- **16**: Schnittpunkt von Ableitungssignal und Vergleichssignal
- **17**: Zeitgeberpuls

## Patentansprüche

1. Verfahren zum Bestimmen eines Abstandes eines Hindernisses von einem Fahrzeug mit einem Abstandssensor mit den Schritten:
Aussenden von Abtastpulsen durch eine Sendevorrichtung des Abstandssensors (1, 2);
Erfassen eines zeitabhängigen Empfängersignals (11) mit einem von dem Hindernis (3) rückgestreuten Abtastpuls;
Differenzieren des Empfängersignals (11) nach der Zeit zum Erzeugen eines Ableitungssignals (14); Erzeugen eines vorgegebenen Vergleichssignals (15), dessen Absolutwert mit der Zeit monoton abnimmt;
Vergleichen des Ableitungssignals (14) mit dem Vergleichssignal (15) und Ausgeben des Zeitgeberpulses (17), wenn das Vergleichssignal (15) und das Ableitungssignal (14) den gleichen Wert annehmen;
Ermitteln des Hindernisabstandes aus der Zeit zwischen dem Aussenden des Abtastpulses durch den Abstandssensor und dem Ausgeben des Zeitgeberpulses.

2. Verfahren nach dem vorangehenden Anspruch, **dadurch gekennzeichnet, dass** das Vergleichssignal (15) positive und negative Werte umfasst, die bezüglich der Nulllinie symmetrisch sind.

3. Verfahren nach dem vorangehenden Anspruch, **dadurch gekennzeichnet, dass** sich die positiven und negativen Werte des Vergleichssignals (15) "trompetenförmig" mit der Zeit der Nulllinie nähern.

4. Verfahren nach einem der beiden vorangehenden Ansprüche, **dadurch gekennzeichnet, dass** ein zeitlicher Mittelwert von wenigstens zwei Zeitgeberpulsen (17) gebildet wird und der Hindernisabstand aus der Zeit zwischen dem Aussenden von Abtastpulsen durch den Abstandssensor und dem Mittelwert der Zeitgeberpulse (17) ermittelt wird.

5. Verfahren nach einem der vorangehenden Ansprüche, **dadurch gekennzeichnet, dass** bei Fehlen von mindestens einem Zeitgeberpuls (17) ein Warnsignal ausgegeben wird.

6. Verfahren nach einem der vorangehenden Ansprüche, **dadurch gekennzeichnet, dass** das Aussenden der Abtastpulse an einem Systemtakt einer Systemuhr (4) gekoppelt wird, mit dem auch eine Auswerteelektronik angesteuert wird.

7. Verfahren nach dem vorangehenden Anspruch, **dadurch gekennzeichnet, dass** der Systemtakt durch eine Verzögerungsstrecke zwischen der Systemuhr (4) und dem Signalgenerator (6) verzögert wird.

8. Verfahren nach einem der vorangehenden Ansprüche, **dadurch gekennzeichnet, dass** mehrere Abtastpulse mit einer vorgegebenen Repetitionsrate ausgesendet werden, wobei die Repetitionsrate von der Entfernung zu einem Hindernis (3) abhängt.

9. Vorrichtung zum Bestimmen eines Abstandes eines Hindernisses von einem Fahrzeug mit einem Abstandssensor, der eine Sendevorrichtung (1) zum Aussenden von Abtastpulsen und eine Empfängervorrichtung (2) zum Erfassen eines zeitabhängigen Empfängersignals (11) mit einem von dem Hindernis (3) rückgestreuten Abtastpuls umfasst, und mit einer Zeitmesseinheit (8) zum Erfassen der Zeit zwischen dem Aussenden eines Abtastpulses und dem Erfassen des von dem Hindernis rückgestreuten Abtastpulses, **gekennzeichnet durch**
einen Differenzierer (5) zum Erzeugen eines Ableitungssignals (14) **durch** Differenzieren des Empfängersignals (11) nach der Zeit;
einen Signalgenerator (6) zum Erzeugen eines vorgegebenen Vergleichssignals(15), dessen Absolutwert mit der Zeit monoton abnimmt;
einen Vergleicher (7) zum Vergleichen des Ableitungssignals (14) mit dem Vergleichssignal (15) und zum Ausgeben eines Zeitgeberpulses an die Zeitmesseinheit (8), wenn das Ableitungssignal (14) den gleichen Wert wie das Vergleichssignal (15) annimmt

10. Vorrichtung nach dem vorangehenden Vorrichtungsanspruch, **dadurch gekennzeichnet, dass** der Signalgenerator (6) ein Rampengenerator oder ein Sägezahngenerator ist.

11. Vorrichtung nach einem der vorangehenden Vorrichtungsansprüche, **dadurch gekennzeichnet, dass** der Signalgenerator (6) einen positiven und einen negativen Ausgang aufweist und ein bezüglich der Nulllinie symmetrisches Vergleichssignal (15) mit positiven und negativen Werten ausgibt.

12. Vorrichtung nach einem der vorangehenden Vorrichtungsansprüche, **dadurch gekennzeichnet, dass** der Signalgenerator (6) ein Generator für ein Vergleichssignal (15) ist, dessen positive und negative Werte sich "trompetenförmig" mit der Zeit der Nulllinie nähern.

13. Vorrichtung nach einem der vorangehenden Vorrichtungsansprüche, **dadurch gekennzeichnet, dass** sie zwischen Empfängervorrichtung (2) und Differenzierer (5) eine Akkumulatoreinheit (9), in der mehrere Empfängersignale (11) gespeichert werden, und eine Mittelwerteinheit (10), die aus mehreren Empfängersignalen (11) ein Mittelwertsignal bildet, umfasst.

14. Vorrichtung nach einem der vorangehenden Vorrichtungsansprüche, **dadurch gekennzeichnet, dass** der Abstandssensor in ein Scheinwerfergehäuse eingebaut ist.

## Claims

1. Method for determining a distance between an obstacle and a vehicle having a distance sensor having the following steps:
sampling pulses are emitted by a transmitter device of the distance sensor (1, 2);
a time-dependent receiver signal (11) is detected with a sampling pulse which is scattered back from the obstacle (3);
the receiver signal (11) is differentiated over time in order to generate a derivative signal (14); a predefined comparison signal (15) whose absolute value decreases monotonously with time is generated;
the derivative signal (14) is compared with the comparison signal (15) and the timer pulse (17) is output if the comparison signal (15) and the derivative signal (14) assume the same value;
the distance from the obstacle is determined from the time between the emission of the sampling pulse by the distance sensor and the outputting of the timer pulse.

2. Method according to the preceding claim, **characterized in that** the comparison signal (15) comprises positive and negative values which are symmetrical with respect to the zero line.

3. Method according to the preceding claim, **characterized in that** the positive and negative values of the comparison signal (15) approach the zero line in a "trumpet shape" over time.

4. Method according to one of the two preceding claims, **characterized in that** a chronological mean value of at least two timer pulses (17) is formed, and the distance from the obstacle is determined from the time between the emission of sampling pulses by the distance sensor and the mean value of the timer pulses (17).

5. Method according to one of the preceding claims, **characterized in that** a warning signal is output if at least one timer pulse (17) fails to occur.

6. Method according to one of the preceding claims, **characterized in that** the emission of the sampling pulses is tied to a system clock rate of a system clock (4), with which clock rate an electronic evaluation system is also actuated.

7. Method according to the preceding claim, **characterized in that** the system clock rate is delayed by a delay section between the system clock (4) and the signal generator (6).

8. Method according to one of the preceding claims, **characterized in that** a plurality of sampling pulses are emitted with a predefined repetition rate, the repetition rate depending on the distance from an obstacle (3).

9. Device for determining a distance between an obstacle and a vehicle using a distance sensor which comprises a transmitter device (1) for emitting sampling pulses and a receiver device (2) for detecting a time-dependent receiver signal (11) with a sampling pulse which is scattered back from the obstacle (3), and having a timer unit (8) for measuring the time between the emission of a sampling pulse and the detection of the sampling pulse which is scattered back from the obstacle, **characterized by**
a differentiator (5) for generating a derivative signal (14) by differentiating the receiver signal (11) over time;
a signal generator (6) for generating a predefined comparison signal (15) whose absolute value decreases monotonously over time;
a comparator (7) for comparing the derivative signal (14) with the comparison signal (15) and for outputting a timer pulse to the timer unit (8) when the derivative signal (14) assumes the same value as the comparison signal (15).

10. Device according to the preceding device claim, **characterized in that** the signal generator (6) is a ramp generator or a saw tooth generator.

11. Device according to one of the preceding device claims, **characterized in that** the signal generator (6) has a positive output and a negative output and outputs a comparison signal (15) which is symmetrical with respect to the zero line and has positive and negative values.

12. Device according to one of the preceding device claims, **characterized in that** the signal generator (6) is a generator for a comparison signal (15) whose positive and negative values approach the zero line in a "trumpet shape" over time.

13. Device according to one of the preceding device claims, **characterized in that** it comprises, between the receiver device (2) and differentiator (5), an accumulator unit (9) in which a plurality of receiver signals (11) are stored, and a mean value unit (10) which forms a mean value signal from a plurality of receiver signals (11).

14. Device according to one of the preceding device claims, **characterized in that** the distance sensor is installed in a headlight housing.

## Revendications

1. Procédé pour déterminer une distance d'un obstacle par rapport à un véhicule avec un capteur de distance comprenant les étapes :
Émission d'impulsions de palpage par un dispositif d'émission du détecteur de distance (1, 2) ;
Détection d'un signal de récepteur dépendant du temps (11) avec une impulsion de palpage renvoyée par l'obstacle (3) ;
Différentiation du signal de récepteur (11) en fonction du temps pour produire un signal de dérivation (14) ; Production d'un signal comparatif prédéfini (15) dont la valeur absolue diminue de manière monotone avec le temps ;
Comparaison du signal de dérivation (14) avec le signal comparatif (15) et émission de l'impulsion d'horloge (17) lorsque le signal comparatif (15) et le signal de dérivation (14) prennent la même valeur ;
Détermination de la distance de l'obstacle à partir du temps entre l'émission de l'impulsion de palpage par le détecteur de distance et l'émission de l'impulsion d'horloge.

2. Procédé selon la revendication précédente, **caractérisé en ce que** le signal comparatif (15) comprend des valeurs positives et négatives qui sont symétriques par rapport à la ligne de référence.

3. Procédé selon la revendication précédente, **caractérisé en ce que** les valeurs positives et négatives du signal comparatif (15) s'approchent de la ligne zéro en « forme de trompette » dans le temps.

4. Procédé selon l'une des deux revendications précédentes, **caractérisé en ce qu'**une valeur moyenne dans le temps d'au moins deux impulsions d'horloge (17) est calculée et la distance de l'obstacle est déterminée à partir du temps entre l'émission des impulsions de palpage par le détecteur de distance et la valeur moyenne des impulsions d'horloge (17).

5. Procédé selon l'une des revendications précédentes, **caractérisé en ce qu'**un signal d'alerte est émis en l'absence d'au moins une impulsion d'horloge (17).

6. Procédé selon l'une des revendications précédentes, **caractérisé en ce que** l'émission de l'impulsion de palpage est couplée à un cycle système d'une horloge système (4) qui commande également un circuit électronique d'évaluation.

7. Procédé selon la revendication précédente, **caractérisé en ce que** le cycle système est retardé par une section de retard entre l'horloge système (4) et le générateur de signal (6).

8. Procédé selon l'une des revendications précédentes, **caractérisé en ce que** plusieurs impulsions de palpage sont émises à un taux de répétition prédéfini, le taux de répétition étant dépendant de l'éloignement par rapport à un obstacle (3).

9. Dispositif pour déterminer une distance d'un obstacle par rapport à un véhicule avec un capteur de distance qui comprend un dispositif d'émission (1) pour émettre des impulsions de palpage et un dispositif récepteur (2) pour détecter un signal de récepteur dépendant du temps (11) avec une impulsion de palpage renvoyée par l'obstacle (3), et comprenant une unité de mesure du temps (8) pour détecter le temps entre l'émission d'une impulsion de palpage et la détection de l'impulsion de palpage renvoyée par l'obstacle, **caractérisé par**
Un différentiateur (5) pour produire un signal de dérivation (14) par différentiation du signal de récepteur (11) d'après le temps ;
Un générateur de signal (6) pour produire un signal comparatif prédéfini (15) dont la valeur absolue diminue de manière monotone avec le temps ;
Un comparateur (7) pour comparer le signal de dérivation (14) avec le signal comparatif (15) et pour envoyer une impulsion d'horloge (17) à l'unité de mesure (8) lorsque le signal de dérivation (14) prend la même valeur que le signal comparatif (15).

10. Dispositif selon la revendication de dispositif précédente, **caractérisé en ce que** le générateur de signal (6) est un générateur de rampe ou un générateur de dents de scie.

11. Dispositif selon l'une des revendications de dispositif précédentes, **caractérisé en ce que** le générateur de signal (6) présente une sortie positive et une sortie négative et délivre un signal comparatif (15) symétrique par rapport à la ligne zéro ayant des valeurs positives et négatives.

12. Dispositif selon l'une des revendications de dispositif précédentes, **caractérisé en ce que** le générateur de signal (6) est un générateur de signal comparatif (15) dont les valeurs positives et négatives s'approchent de la ligne zéro en « forme de trompette » dans le temps.

13. Dispositif selon l'une des revendications de dispositif précédentes, **caractérisé en ce qu'**il comprend entre le dispositif récepteur (2) et le différentiateur (5) une unité d'accumulation (9) dans laquelle sont enregistrés plusieurs signaux de récepteur (11) et une unité de valeur moyenne (10) qui calcule un signal de valeur moyenne à partir de plusieurs signaux de récepteur (11).

14. Dispositif selon l'une des revendications de dispositif précédentes, **caractérisé en ce que** le détecteur de distance est monté dans un boîtier de projecteur.
